Europäisches Patentamt

(19) European Patent Office

Office européen des brevets

(11) Numéro de publication: **0 230 162**
**B1**

(12) **FASCICULE DE BREVET EUROPÉEN**

(45) Date de publication du fascicule du brevet:
07.02.90

(51) Int. Cl. ⁵: **B 60 R 25/00**

(21) Numéro de dépôt: 86402539.0

(22) Date de dépôt: 14.11.86

(54) Dispositif antivol pour véhicule rendant au moins une roue inutilisable et roue comportant un tel dispositif.

(30) Priorité: 15.11.85 FR 8516940
10.07.86 FR 8610106

(43) Date de publication de la demande:
29.07.87 Bulletin 87/31

(45) Mention de la délivrance du brevet:
07.02.90 Bulletin 90/06

(84) Etats contractants désignés:
AT BE CH DE ES FR GB GR IT LI LU NL SE

(56) Documents cité:
US-A-1 876 715
US-A-2 470 873
US-A-2 737 223
US-A-3 003 539
US-A-3 443 546
US-A-4 375 200

(73) Titulaire: COMPAGNIE FINANCIERE SAINT-NICOLAS
Allée Frion
F-93340 Le Raincy (FR)

(72) Inventeur: Mourot, Franck
Vallon de la Baudille
F-13007 Marseille (FR)
Inventeur: Dana, Jean Dominique
Le Mas du Cade Les Plaines
F-83131 Tanneron (FR)

(74) Mandataire: Derambure, Christian
BUGNION ASSOCIES 55, rue Boissonade
F-75014 Paris (FR)

LIBERGRAF, STOCKHOLM 1990

## Description

L'invention concerne un dispositif antivol pour véhicule et une roue comportant un tel dispositif. Elle est plus particulièrement destinée aux véhicules à pneus, tels que les automobiles, camions, autocars ou autres.

Un tel dispositif antivol vise à protéger un véhicule contre le vol. Les dispositifs antivols connus sont très variés. Ils sont généralement de trois types: un premier type dissuasif vise à dissuader un éventuel voleur de tenter de voler le véhicule (alarmes, marquages ...), un deuxième type actif vise à empêcher le voleur éventuel de pénétrer dans le véhicule et de s'en servir (serrures renforcées, blocages de volant, barres de sécurité rendant plusieurs organes solidaires, ...) et un troisième type vise en dernier lieu à rendre le véhicule inutilisable (coupure de l'allumage, de l'alimentation, de la batterie, blocage des freins, ...).

Ces dispositifs connus donnent en général satisfaction, mais on constate qu'aucun d'entre eux n'empêche véritablement le vol du véhicule. En effet, les voleurs sont de mieux en mieux équipés et ont une grande connaissance des dispositifs antivols. Il leur est donc aisé de franchir les différentes barrières qui les empêchent de voler le véhicule, et une fois qu'ils ont pénétré à l'intérieur du véhicule et déjoué les dispositifs dissuasifs, ils finissent par rendre le véhicule utilisable.

En particulier, les voleurs détectent facilement la présence des dispositifs antivols des premier et deuxième types et souvent les rendent inefficaces. De plus, concernant les dispositifs du troisième type, les voleurs détectent leur présence très vite après avoir pénétré à l'intérieur du véhicule, et moyennant un bon outillage, ils peuvent y remédier facilement.

Par conséquent, l'inventeur a déterminé que les problèmes dûs à ces dispositifs antivols connus proviennent du fait qu'ils ne sont jamais irréversibles, c'est-à-dire qu'après constatation de l'existence de tels dispositifs, il est possible d'y remédier et qu'ils sont mis en action trop tôt.

De plus, ces dispositifs connus sont relativement complexes et onéreux.

Par ailleurs, on connaît aussi du brevet américain US-A-3 003 539 un dispositif antivol associé rigidement et de façon inamovible à la valve d'un pneu, comportant un organe de dégonflage, mobile sous l'action d'un ressort vers l'obturateur de la valve pour l'ouvrir, et un organe pivotant comprenant une masse et un levier normalement interposé entre l'organe de dégonflage et l'obturateur, mais déplacé sous l'effet de la force centrifuge due à la rotation de la roue de façon à permettre la coopération de l'organe de dégonflage et de l'obturateur, et donc le gonflage du pneu lorsque la roue tourne. Ce dispositif connu comporte des moyens à serrure permettant de le mettre à l'état actif, ou à l'état inactif, ou d'ouvrir le dispositif pour vérifier ou régler la pression d'air dans le pneu.

Un tel dispositif connu est compliqué et délicat à manipuler. En effet, il nécessite de nombreuses manipulations pour le mettre à l'état actif, ou à l'état inactif, ou pour vérifier la pression du pneu. De plus, il comporte un grand nombre de pièces et est d'un prix de revient trop important. Enfin, et surtout, un tel dispositif présente un danger réel pour l'utilisateur. En effet, un dégonflage intempestif du pneu par le dispositif peut avoir lieu, même lorsque le dispositif est mis à l'état inactif, si une de ses pièces vient à casser (par exemple la barre de commande 50). Ce risque est d'autant plus grave que la rupture d'une pièce intervient le plus souvent à haute vitesse, lorsque les sollicitations et les efforts, notamment l'accélération centrifuge, sont les plus importants.

On connaît aussi du brevet américain US-A-4 375 200 un dispositif antivol placé sur la valve d'une roue, qui comporte un piston agissant sur la valve V, et une came mobile sous l'effet de la force centrifuge perpendiculairement à l'axe du piston, et qui, dans son déplacement, agit sur le piston pour le repousser dans le sens de l'ouverture de la valve et provoquer ainsi le dégonflage. La came repousse le piston qui repousse la valve. Ce dispositif est d'une fiabilité insuffisante, notamment du fait des frottements mal maîtrisés de la came contre le piston, et des nombreuses pièces mobiles qui le constituent et qui peuvent se bloquer. Ce dispositif est également pour ces mêmes raisons d'un coût et d'un encombrement trop importants.

L'invention vise à pallier les inconvénients sus-cités des dispositifs antivol connus et a pour objet un dispositif antivol qui rend le véhicule inutilisable après qu'il ait été dérobé et mis en mouvement, et ce de façon momentanément irréversible pour le voleur, sans être irréversible pour le propriétaire.

L'invention a également pour objet un tel dispositif qui peut être adapté facilement et rapidement à toute roue d'un véhicule neuf ou en circulation, et qui, par ailleurs, est d'une fiabilité parfaite, et ne constitue pas un danger pour la sécurité de l'utilisateur, notamment lorsqu'il est à l'état inactif et à haute vitesse. Un autre objet de l'invention est de proposer un tel dispositif qui comporte un nombre minimum de pièces et dont le prix de revient est aussi faible que possible.

L'invention propose un dispositif antivol pour véhicule à pneus, du type comportant des moyens de dégonflage automatique d'un pneu du véhicule qui provoquent le dégonflage du pneu lorsque le dispositif est mis à l'état actif par des moyens de commande et que le véhicule est en mouvement, les moyens de dégonflage étant déplacés sous l'action de la force d'inertie centrifuge due à la rotation de la roue correspondante, et qui sont inopérants dans les autres cas, caractérisé en ce que les moyens de dégonflage sont constitués de moyens mobiles d'obturation d'au moins un orifice par lequel l'air sous pression du pneu peut s'échapper, ces moyens mobiles d'obturation et de dégonflage automatique obturant normalement hermétiquement cet orifice lorsque le dispositif est à l'état inactif et/ou que la roue est immobile, mais cessant de l'obturer et laissant l'air s'échapper par l'orifice quand le dispositif a été mis à l'état actif et dès que la force d'inertie centrifuge atteint une valeur suffisante pour déplacer les moyens mobiles d'obturation et de dégonflage automatique sur lesquels elle agit.

Les moyens mobiles d'obturation et de dégonflage automatique du pneu sont mobiles au moins dans une direction radiale ou sensiblement radiale de la roue et vers l'extérieur de cette roue à partir de leur position normale d'obturation; des moyens de rappel de ces moyens de dégonflage dans leur position normale inopérante d'obturation hermétique de l'orifice sont prévus et sont actifs au moins lorsque le dispositif est à l'état inactif et/ou lorsque la roue est immobile.

Le dispositif selon l'invention comporte avantageusement des moyens de sécurité bloquant les moyens mobiles d'obturation et de dégonflage automatique dans la position où ils obturent effectivement l'orifice, indépendamment de la position des moyens de commande lorsque le véhicule a atteint une vitesse prédéterminée, pour empêcher le dégonflage, intempestif ou non, à haute vitesse du pneu correspondant.

Dans une variante avantageuse de l'invention, le dispositif est associé à au moins une roue du véhicule par des moyens d'association amovible, notamment à la valve du pneu, de sorte qu'il peut être enlevé et installé rapidement et facilement.

Dans un mode de réalisation possible, la masse des moyens mobiles d'obturation et de dégonflage automatique est variable selon l'état du dispositif. A l'état inactif du dispositif; la masse de ces moyens mobiles d'obturation et de dégonflage automatique est telle qu'ils sont maintenus immobiles en position d'obturation de l'orifice quelle que soit la vitesse du véhicule. Par contre, au moins à l'état actif du dispositif, la masse de ces moyens mobiles d'obturation et de dégonflage automatique est telle que la rotation de la roue entraîne leur déplacement à l'encontre de la pression interne du pneu et/ou des moyens de rappel dès que la vitesse du véhicule est supérieure à une vitesse V donnée.

L'invention concerne également une roue comportant un dispositif selon l'invention.

Un dispositif antivol selon l'invention rend le véhicule volé inutilisable. De ce fait, un éventuel voleur est contraint de l'abandonner sur place. Dans le pire des cas, où le voleur s'aperçoit immédiatement de la présence du dispositif antivol selon l'invention, celui-ci implique une telle perte de temps pour le voleur qu'il provoque au moins un effet dissuasif. En particulier, s'il y a quatre tels dispositifs, un à chacune des roues, on comprend que le voleur soit découragé. En effet, le temps nécessaire pour rendre un dispositif antivol inactif est très important dans la lutte contre les vols de voiture puisque les voleurs ne disposent que de peu de temps pour perpétrer leur forfait.

L'invention procure donc un dispositif antivol simple et peu coûteux, et qui offre une garantie totale de sécurité à son utilisateur lorsqu'il est à l'état inactif.

D'autres avantages et caractéristiques de l'invention apparaîtront à la lecture de la description suivante des modes de réalisation préférentiels de l'invention, donnés à titre d'exemple non limitatif, en référence aux figures annexées dans lesquelles:

- la figure 1 est une vue schématique et partielle en coupe par rapport à un plan sensiblement orthogonal à l'axe de rotation d'une roue et d'un dispositif selon un premier mode de réalisation de l'invention.
- la figure 2 est une vue schématique en coupe par un plan passant par l'axe de la valve d'un dispositif selon un deuxième mode de réalisation de l'invention.
- la figure 3 est une vue de détail en coupe par l'orifice du bouchon d'obturation et des moyens mobiles d'obturation de cet orifice du deuxième mode de réalisation de l'invention.
- la figure 4 est une vue schématique en coupe d'une première variante d'un troisième mode de réalisation de l'invention.
- la figure 5 est une vue schématique d'une deuxième variante du troisième mode de réalisation de l'invention.

Un dispositif antivol 1 selon l'invention pour véhicule à pneus est du type comportant des moyens 2 de commande de ce dispositif 1 de l'état actif où il est susceptible d'empêcher le vol du véhicule, à l'état inactif où il est sans effet et autorise le fonctionnement normal du véhicule, et réciproquement. Ces moyens de commande peuvent être constitués d'une serrure, mécanique, électrique ou électromagnétique. Une serrure mécanique présente l'avantage d'une fiabilité importante. Par contre, une serrure électrique ou électromagnétique présente l'avantage d'une plus grande inviolabilité.

Le dispositif selon l'invention est associé à une roue 3 du véhicule dont on veut empêcher le vol. On peut prévoir un tel dispositif sur plusieurs des roues, voire sur les quatre roues du véhicule.

Un dispositif selon l'invention comporte des moyens 4 de dégonflage automatique d'au moins un pneu 5 du véhicule, rendant la roue 3 correspondante et donc le véhicule inutilisables. On entend par "roue correspondante" la roue comportant le pneu 5 et le dispositif antivol 1. Une roue 3 selon l'invention comporte donc une jante 6, un pneu 5 autour de la jante 6 et un dispositif antivol 1 selon l'invention.

Les moyens 4 de dégonflage provoquent le dégonflage du pneu 5 lorsque le dispositif 1 est mis à l'état actif par les moyens de commande et que le véhicule est en mouvement, notamment dès que la roue 3 à laquelle le dispositif est associé commence à tourner, et sont inopérants dans les autres cas, c'est-à-dire lorsque le dispositif 1 est mis à l'état inactif ou lorsque le véhicule est arrêté et que la roue 3 ne tourne pas.

Ainsi, le propriétaire du véhicule met le dispositif 1 à l'état inactif lorsqu'il utilise son véhicule. Dans ce cas, les moyens 4 de dégonflage sont inopérants. Lorsqu'il quitte son véhicule, le propriétaire met le dispositif 1 à l'état actif. Le véhicule étant arrêté, les moyens 4 de dégonflage sont inopérants. Mais si la roue 3 tourne, par suite d'une tentative de vol du véhicule, les moyens 4 de dégonflage fonctionnent et dégonflent le pneu 5, rendant la roue 3 et le véhicule inutilisables, avortant ainsi la tentative de vol.

L'invention concerne donc un dispositif antivol pour véhicule à pneus, du type comportant des moyens 4 de dégonflage automatique d'un pneu 5 du véhicule qui provoquent le dégonflage du pneu 5 lorsque le dispositif est mis à l'état actif par des moyens 2 de commande et que le véhicule est en mouvement, les moyens 4 de dégonflage étant déplacés sous l'action de la force d'inertie centrifuge due à la rotation de la roue 3 correspondante, et qui sont inopérants dans les autres cas, caractérisé en ce que les moyens 4 de dégonflage sont constitués de moyens mobiles d'obturation d'au moins un orifice 7 par lequel l'air sous pression du pneu 3 peut s'échapper, les moyens mobiles d'obturation obturant normalement hermétiquement cet orifice 7 lorsque le dispositif est à l'état inactif et/ou que la roue 3 est immobile, mais cessant de l'obturer et laissant l'air s'échapper par l'orifice 7 quand le dispositif a été mis à l'état actif et dès que la force d'inertie centrifuge atteint une valeur suffisante pour les déplacer.

Les moyens mobiles d'obturation et de dégonflage automatique du pneu 5 sont mobiles au moins dans une direction radiale ou sensiblement radiale de la roue 3 et vers l'extérieur de la roue 3 à partir de leur position normale d'obturation.

Le dispositif 1 selon l'invention comporte des moyens de rappel des moyens 4 de dégonflage, dans leur position normale inopérante d'obturation hermétique de l'orifice 7 au moins lorsque le dispositif est à l'état inactif et/ou lorsque la roue 3 est immobile.

Dans un premier mode de réalisation de l'invention, le dispositif 1 selon l'invention est associé à la roue 3 non seulement lorsqu'il est à l'état actif, mais aussi lorsqu'il est à l'état inactif, et il comporte avantageusement des moyens de sécurité actifs lorsque le dispositif 1 est à l'état inactif bloquant les moyens 4 de dégonflage dans la position où ils sont inopérants, indépendamment de la position des moyens 2 de commande lorsque le véhicule a atteint une vitesse prédéterminée, pour empêcher le dégonflage intempestif ou non à haute vitesse du pneu 5 correspondant. De ce fait, les moyens 4 de dégonflage ne risquent pas de dégonfler le pneu 5 lorsque le véhicule roule à une vitesse importante, supérieure à une vitesse déterminée et que le dispositif 1 est à l'état inactif, de façon à éviter qu'un accident ne se produise du fait du dégonflage intempestif du pneu 5. Ces moyens de sécurité peuvent être des moyens mécaniques enclenchés par une certaine valeur de la force centrifuge, ou des moyens électriques ou électromagnétiques. Ils peuvent fonctionner à partir d'un signal émis par le chronotachymètre du véhicule ou de toute autre façon.

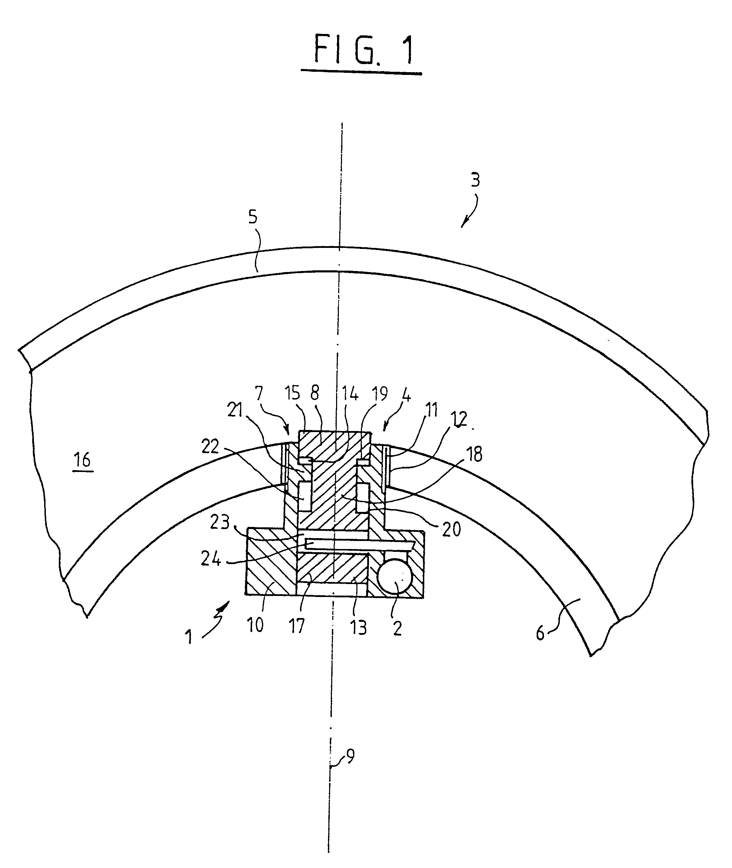

La figure 1 illustre le premier mode de réalisation préférentiel de l'invention, dans lequel le dispositif 1 est associé à la jante 6 de la roue 3, l'orifice 7 étant pratiqué à travers la jante 6, le pneu 5 étant du type sans chambre à air.

Le dispositif 1 comporte un carter 10 associé rigidement à la jante 6, par exemple par vissage dans le trou 7, auquel cas le carter 10 comporte un filetage extérieur 11 coopérant avec un taraudage 12 du trou 7. Ce carter 10 sert de support à l'ensemble du dispositif 1 et réalise des moyens d'association du dispositif 1 à la jante 6. Le carter 10 comporte un alésage intérieur sensiblement cylindrique d'axe 9 dans lequel un piston 13 vient coulisser selon l'axe 9, dans une direction au moins sensiblement radiale 9 Le piston 13 comporte des moyens 14 d'herméticité à son extrémité libre 15 tournée vers l'intérieur 16 du pneu 5. L'autre extrémité 17 du piston 13 coopère avec les moyens 2 de commande. Le filetage 11 et le taraudage 12 constituent des moyens 11, 12 d'association rigide amovible hermétique du dispositif 1 à la jante de la roue 3.

Ainsi, les moyens 8 d'obturation sont constitués du piston 13 coopérant avec le carter 10 associé à la jante 6. Les moyens 14 d'herméticité sont intercalés entre le piston 13 et le carter 10 pour obturer le trou 7. De préférence, le piston 13 comporte une partie centrale 18 moins large (perpendiculairement à l'axe 9) que les extrémités 15, 17 du piston 13. Ainsi, le piston 13 comporte deux épaulements 19, 20 au voisinage respectivement des extrémités 15 et 17. De plus, le carter 10 comporte un rebord 21 faisant saillie à l'intérieur de l'alésage. Ce rebord 21 coopère avec l'épaulement 19 de l'extrémité d'herméticité 15 du pneu 5 de façon à réaliser les moyens 14 d'herméticité. Un joint peut être placé entre les deux surfaces de contact de l'épaulement 19 et du rebord 21 afin d'améliorer l'herméticité. Le rebord 21 coopère avec la partie centrale 18 du piston 13 et en assure en partie le guidage. Enfin, des moyens 22 de rappel, notamment un ressort de compression, sont avantageusement prévus entre le rebord 21 et l'épaulement 20 du côté de l'extrémité 17 du piston, la plus éloignée du pneu 5. Ces moyens 22 de rappel ramènent le piston 13 dans sa position où il obture effectivement le trou 7 de façon hermétique lorsque le pneu 5 est entièrement dégonflé ou que la roue 3 est arrêtée, de façon à plaquer l'épaulement 19 du piston 13 contre le rebord 21 pour assurer l'herméticité, même si la pression est nulle à l'intérieur 16 du pneu 5. Ces moyens 22 rappellent les moyens 4 de dégonflage en position inopérante, c'est-à-dire les moyens 8 d'obturation dans la position où ils obturent effectivement le trou 7.

L'autre extrémité 17 du piston 13 la plus éloignée du pneu 5 coopère avec les moyens 2 de commande. Pour ce faire, elle comporte avantageusement un perçage 23 sensiblement perpendiculaire à l'axe 9, dans lequel une fourchette 24 des moyens 2 de commande peut coulisser, pour bloquer le piston 13 dans sa position où les moyens 4 de dégonflage sont inopérants, c'est-à-dire dans sa position où il obture de façon hermétique le trou 7.

Les moyens de sécurité mentionnés ci-dessus agissent avantageusement sur cette fourchette 24 en la maintenant insérée dans le perçage 23 à partir d'une certaine vitesse de la roue 3 et/ou du véhicule.

Ces moyens de sécurité sont par exemple constitués d'un manchon mobile autour du carter 10 qui se déplace sous l'effet de la force centrifuge dès que la vitesse de rotation de la roue 3 dépasse une valeur donnée. Ce manchon vient alors en regard du trou du carter par lequel passe la fourchette 24 lorsqu'elle est déplacée normalement, et empêche que cette fourchette 24 ne se déplace accidentellement.

L'alésage intérieur du carter 10 et le piston 13 ont de préférence une section droite transversale circulaire. Mais cela n'est pas obligatoire, du moment que leurs formes respectives sont en correspondance pour que le piston 13 puisse coulisser à l'intérieur de l'alésage et réaliser l'herméticité.

Ce premier mode de réalisation de l'invention fonctionne de la façon suivante:

Lorsque le propriétaire du véhicule utilise normalement le véhicule, la fourchette 24 est à l'intérieur du perçage 23, ce qui correspond à l'état inactif du dispositif 1. En effet, dans ce cas, le piston 13 ne peut plus coulisser dans l'alésage du carter 10 et les moyens 14 d'herméticité obturent le trou 7. Par conséquent, le pneu reste parfaitement gonflé. Lorsque le propriétaire quitte son véhicule, il agit sur les moyens 2 de commande, notamment à l'aide d'une clé, ce qui a pour effet de dégager la fourchette 24 du perçage 23. Alors, le piston 13 est libre de se déplacer dans l'alésage intérieur du carter. Cependant, du fait de la pression interne du pneu 5 et des moyens de rappel 22, le piston ne se déplace pas et les moyens 8 d'obturation continuent à obturer le trou 7 grâce aux moyens 14 d'herméticité qui continuent à coopérer avec le rebord 21. Dans cet état actif du dispositif 1, si la roue 3 tourne, le piston 13 est soumis à une force centrifuge qui le fait se déplacer dans l'alésage du carter 10 à l'intérieur du pneu 5. De ce fait, les moyens 14 d'herméticité ne coopèrent plus avec le rebord 21, et l'air est libre de s'échapper. Pour faciliter le dégonflage, on peut prévoir une ou plusieurs rainures longitudinales dans la partie centrale 18 et dans l'extrémité 17 coopérant avec les moyens 2 de commande, ou tout autre dispositif. Sinon l'air s'infiltre entre le piston 13 et le carter 10. Lorsque le pneu 5 est entièrement dégonflé ou que la roue s'arrête à nouveau, le piston 13 revient à sa position initiale (telle que représentée en figure 1) sous l'effet des moyens 22 de rappel et/ou de la pression interne du pneu 5, et le dégonflage est interrompu.

Lorsque le véhicule a été volé et que le voleur l'a abandonné, pneu(s) à plat, le propriétaire n'aura qu'à agir sur les moyens 2 de commande pour rendre le(s) dispositif(s) inactif(s), et à regonfler le(s) pneu(s) à l'aide par exemple d'un compresseur portatif connu.

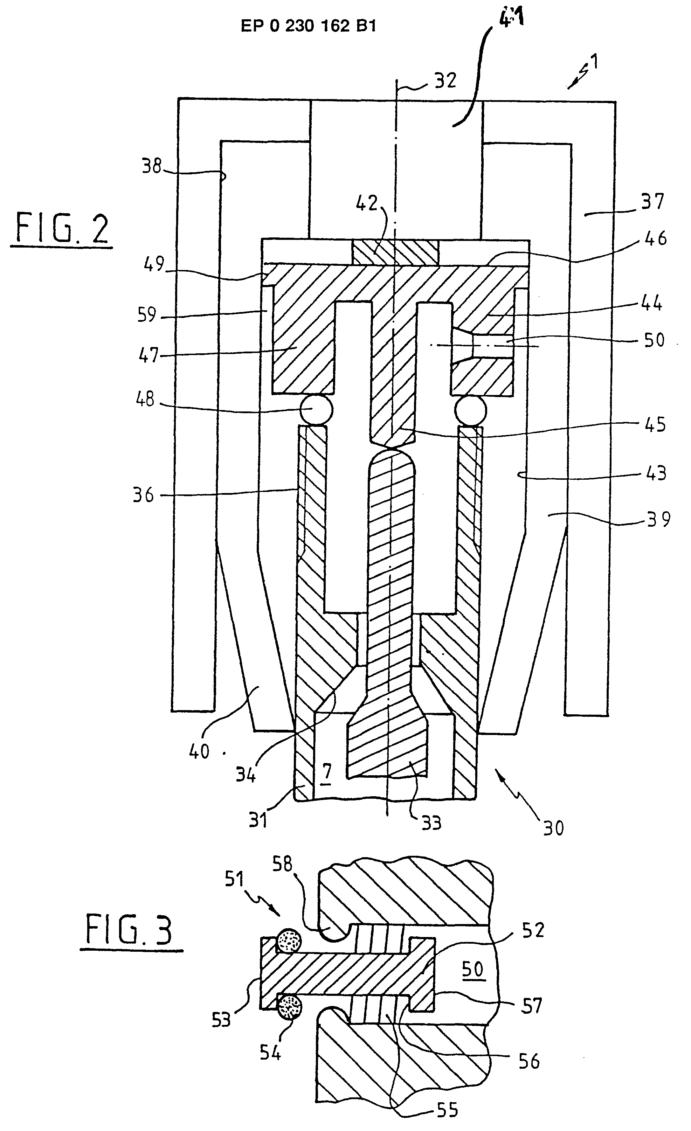

Dans le second mode de réalisation préférentiel représenté en figures 2 et 3, un dispositif 1 selon l'invention est associé par des moyens 39 d'association à une valve 30 qui permet en temps normal le gonflage et le dégonflage d'un pneu d'un véhicule non représenté. Le dispositif 1 selon l'invention se substitue donc au bouchon normal de sécurité de la valve 30. Cette valve 30 est soit une valve d'une chambre à air de la roue, soit une valve ménagée sur la jante de la roue dans le cas où celle-ci est du type sans chambre à air.

Selon l'invention, les moyens 39 d'association du dispositif 1 à la roue 3 comportant le pneu 5 sont des moyens d'association amovible, de sorte que le dispositif 1 peut être enlevé pour éviter tout risque de dégonflage intempestif, et installé rapidement et facilement dès qu'on veut le rendre actif pour empêcher le vol du véhicule. Ainsi, le dispositif 1 peut être dissocié de la valve 30 qui sera alors recouverte par son bouchon normal, et ce afin d'éviter un risque de dégonflage intempestif, ou la détérioration, voire même la perte du dispositif en cas d'utilisation intensive du véhicule par son propriétaire. De plus, le dispositif 1 peut être installé rapidement et facilement en le substituant au bouchon normal de la valve lorsque le véhicule est à l'arrêt et qu'on veut rendre le dispositif 1 actif pour empêcher le vol du véhicule.

La valve 30 comporte de façon connue en soi un corps 31 sensiblement cylindrique de révolution autour d'un axe 30 et un obturateur 33 qui coopère avec un siège 34 du corps 31 pour obturer hermétiquement la valve 30. L'orifice 7 obturé par les moyens mobiles d'obturation est donc celui de la valve 30. L'obturateur 33 est rappelé en permanence dans sa position d'obturation de la valve par la pression de l'air à l'intérieur du pneu de la chambre à air. Lorsqu'on déplace l'obturateur 33 vers l'intérieur de façon à la décoller du siège 34, l'air peut s'échapper à travers la valve 30. Le corps 31 de la valve 30 comporte à son extrémité libre un filetage extérieur 36 qui permet l'association par vissage du bouchon normal de la valve 30.

Le dispositif 1 comporte un carter extérieur 37 formant un alésage intérieur de révolution 38. Les moyens 39 d'association amovible comportent des mâchoires 40 qui coulissent à l'intérieur de l'alésage 38 du carter 37 pour former mandrin. Le carter 37 supporte des moyens 41 à serrure qui peuvent être réalisés de diverses façons connues (mécaniques, électroniques ...). Ces moyens 41 à serrure coopèrent d'une part avec les mâchoires 40 pour en commander le mouvement et assurer le serrage de ces mâchoires contre le corps 31 de la valve, et d'autre part avec un poussoir 42. Les moyens 41 à serrure constituent avantageusement également des moyens de blocage temporaire du dispositif associé à la valve interdisant toute dissociation de ce dispositif de la valve lorsque celui-ci est à l'état actif.

Dans une première variante, les moyens 39 d'association amovible à mandrin sont constitués d'un taraudage intérieur de l'alésage 38 du carter 37 qui coopère avec des rainures extérieures des mâchoires 40. Ces mâchoires 40 sont articulées à leur extrémité libre et coopèrent avec une surface en tronc de cône de l'alésage 38. Ainsi, pour resserrer ou desserrer le mandrin ainsi formé, il suffira de tourner les mâchoires 40 par rapport au carter 37. Dans ce cas, les moyens 41 à serrure constituent des moyens de blocage des mâchoires 40 par rapport au carter 37, ce qui empêche temporairement le desserrage des mâchoires.

Dans une deuxième variante possible, les moyens 41 à serrure commandent directement le mouvement des mâchoires 40 et donc le serrage et desserrage de ces mâchoires par rapport au corps 31 de la valve 30.

La surface intérieure 43 des mâchoires 40 formant le mandrin est conformée de façon à permettre le coulissement axial d'un bouchon monobloc d'obturation 44 de la valve. Ce bouchon monobloc d'obturation 44 constitue les moyens de dégonflage automatique de la roue lorsque le dispositif est à l'état actif et que le véhicule est en mouvement. Pour ce faire, le bouchon d'obturation 44 est en forme de coiffe et comporte un ergot 45 s'étendant à partir du fond 46 du bouchon 44 sensiblement dans l'axe 31 de la valve 30 et vers l'intérieur 35 pour coopérer avec l'obturateur 33 de la valve 30 de façon à l'ouvrir. Le bouchon 44 comporte également une jupe 47 cylindrique de révolution autour de l'axe 37, et qui s'étend à partir du fond 46 du bouchon vers l'intérieur. Les dimensions de cette jupe 47 sont telles qu'elle peut être plaquée contre l'extrémité libre de la valve 30 par l'intermédiaire d'un joint 48 assurant l'herméticité de la liaison entre la valve 30 et le bouchon 44.

Le poussoir 42 pré-cité actionné par les moyens 41 à serrure coopère avec le fond 46 du bouchon 44 pour plaquer ce bouchon 44 contre la valve 30. Le fond 46 du bouchon 44 a des dimensions radiales supérieures aux dimensions radiales de la jupe 47, de façon à former une couronne 49 de coopération avec la surface intérieure 43 des mâchoires 40. La jupe 47 du bouchon 44 n'est donc pas en contact avec cette surface intérieure 43 des mâchoires 40.

Le bouchon 44 d'obturation monobloc constitue donc des moyens d'obturation de la valve et des moyens 45 de déplacement de l'obturateur 33 de la valve 30 en position d'ouverture de cette valve 30. Le bouchon 44 constitue également des moyens de dégonflage automatique du pneu, et pour ce faire, la jupe 47 est traversée par au moins un orifice 50 par lequel l'air peut s'échapper de l'intérieur vers l'extérieur. Le bouchon 44 comporte également des moyens 51 mobiles d'obturation de chaque orifice 50. Ces moyens mobiles d'obturation ne sont pas représentés en figure 2 mais sont représentés en détail en figure 3.

Le bouchon 44 d'obturation de la valve 30 comporte de préférence une pluralité d'orifices 50 disposés radialement dans différentes directions par rapport à l'axe 32 de la valve 30, et régulièrement répartis autour de cet axe 32. De préférence, le bouchon 44 comporte trois orifices 50 disposés à 120° sur le pourtour de la jupe 47 du bouchon 44 d'obturation de la valve 30.

Les moyens 51 mobiles d'obturation de chaque orifice 50 sont constitués de préférence d'un piston 52 coulissant dans l'orifice 50 et comportant à son extrémité extérieure 52 des moyens 54 d'herméticité, notamment un joint circulaire d'herméticité. Le piston 52 est libre de se déplacer vers l'extérieur, mais rappelé vers l'intérieur dans sa position d'obturation par des moyens 55 de rappel, notamment constitués d'un ressort spiral enroulé autour du piston 52 entre une butée 56 de l'extrémité 57 intérieure du piston 52, et un rétrécissement 58 de l'orifice 50 à son extrémité extérieure.

L'extrémité extérieure 53 du piston 52 a également une forme de butée circulaire, de façon à retenir le joint 54 d'herméticité, et à le plaquer contre le rétrécissement 58 de l'orifice 50 sous l'effet du ressort de rappel 55. Le piston 52 est constitué d'une matière la plus lourde possible.

Le dispositif selon le deuxième mode de réalisation préférentiel de l'invention fonctionne de la façon suivante:

Lorsque le propriétaire désire protéger son véhicule contre le vol, il dévisse le bouchon normal d'une valve de gonflage d'une de ses roues, et associe un dispositif 1 selon l'invention à la place de ce bouchon rigidement à la valve 30. Pour ce faire, il met en place le dispositif 1, resserre les mâchoires 40 du mandrin en tournant le carter 37 ou en agissant sur les moyens 41 à serrure, ce qui a également pour effet de plaquer le bouchon 44 d'obturation contre la valve 30 et d'ouvrir cette valve 30.

Lorsque l'utilisateur retire sa clé des moyens 41 à serrure, le dispositif 1 est à l'état actif et susceptible d'engendrer le dégonflage de la roue dès que le véhicule est en mouvement, et associé rigidement à la valve 30. Les mâchoires 40 du mandrin prennent appui sur le corps 31 de la valve 30 en dehors du filetage d'extrémité de cette valve 30. De la sorte, il est impossible de dissocier le dispositif 1 de la valve 30.

La valve 30 sortant de la roue sensiblement horizontalement ou légèrement inclinée par rapport à l'horizontale, dès que la roue se met à tourner, une force centrifuge s'exerce sur les pistons 52 respectifs d'au moins deux orifices 50 radiaux du bouchon 44.

A partir d'une certaine vitesse, le piston est déplacé à l'encontre de l'action du ressort 55 sous l'effet de l'action de la force d'inertie centrifuge et le joint 34 d'herméticité est décollé de l'orifice 50, ce qui a pour effet de laisser passer l'air de l'intérieur de la valve vers l'extérieur. La jupe 47 du bouchon 44 ne collant pas à la surface 43 intérieure des mâchoires 40, et les mâchoires 40 ne constituant pas une association hermétique à la valve, l'air peut librement s'échapper vers l'extérieur à travers l'espace libre 59 ménagé entre la jupe 47 et la surface 43 et à travers les mâchoires 40 et la roue se dégonfle très rapidement.

En variante, les moyens de commande permettant de mettre à l'état actif ou à l'état inactif le dispositif 1, peuvent être indépendants des moyens de blocage temporaire. Pour ce faire, il faudra prévoir deux dispositifs de serrure, l'un commandant le blocage des mâchoires 40 contre le corps 31 de la valve 30, et l'autre imposant le déplacement du poussoir 42 ce qui entraîne l'ouverture de la valve 30 et le plaquage du bouchon 44 contre cette valve 30.

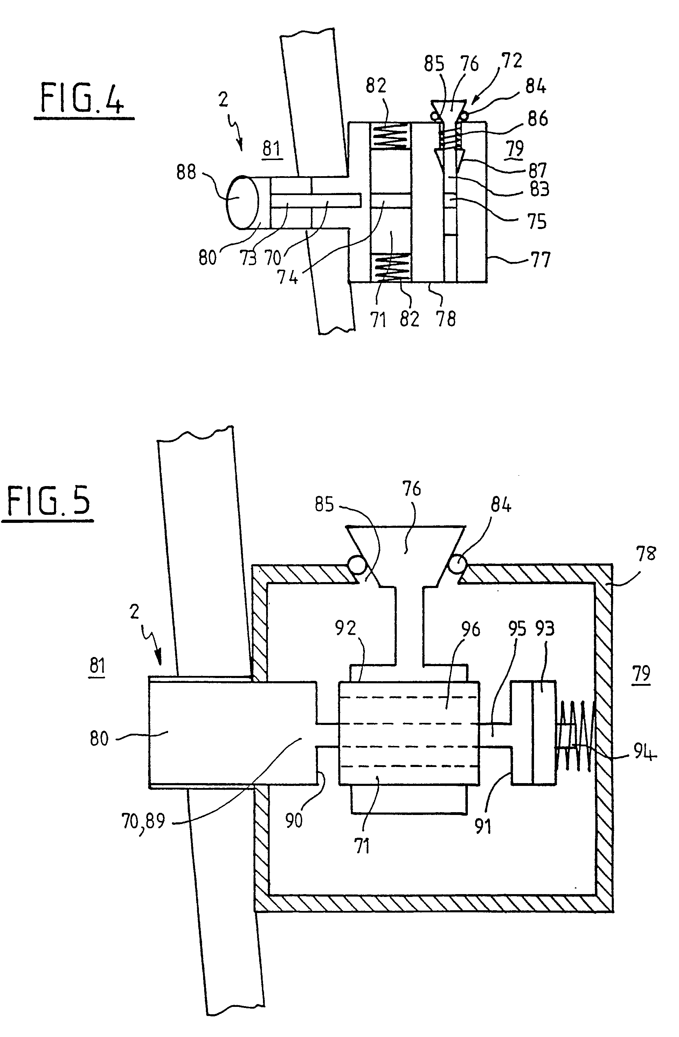

Dans le troisième mode de réalisation préférentiel de l'invention représenté sur les figures 4 et 5, la masse des moyens mobiles d'obturation et de dégonflage est différente selon que le dispositif est à l'état actif ou à l'état inactif.

Au moins à l'état actif du dispositif, la masse des moyens mobiles d'obturation est telle que la rotation de la roue 3 entraîne le déplacement de ces moyens mobiles par inertie centrifuge, à l'encontre de la pression interne du pneu 5 et/ou des moyens de rappel, dès que la vitesse du véhicule est supérieure à une vitesse V donnée.

A l'état inactif du dispositif, la masse des moyens mobiles d'obturation et de dégonflage automatique a une valeur dimensionnée en fonction de la pression interne du pneu 5 et/ou de la puissance des moyens de rappel, de sorte que ces moyens mobiles d'obturation et de dégonflage sont maintenus immobiles en position d'obturation de l'orifice 7, quelle que soit la vitesse du véhicule.

Les moyens 2 de commande comportent des moyens 70 d'association rigide d'une masse 71 supplémentaire aux moyens 8 mobiles d'obturation et de dégonflage automatique qui permettent de solidariser ladite masse 71 aux moyens 8 mobiles d'obturation lors du passage à l'état actif du dispositif de façon à rendre ces moyens 8 mobiles susceptibles d'être déplacés sous l'action de la force d'inertie centrifuge due à la rotation de la roue.

Sur la figure 4, on a représenté une première variante possible du troisième mode de réalisation de l'invention. Dans cette variante, les moyens 70 d'association de la masse 71 aux moyens 72 mobiles d'obturation sont constitués d'un doigt 73 qui peut coulisser sous l'effet des moyens 2 de commande de façon à pénétrer d'une part dans et à travers un orifice 74 de la masse 71, et d'autre part dans un orifice 75 de l'obturateur 76 de la valve.

Les dimensions transversales des orifices 74 et 75 de la masse 71 et de l'obturateur 76 sont voisines de celles du doigt 73, de sorte que le doigt 73 solidarise la masse 71 et l'obturateur 76 dans leurs déplacements selon la direction radiale.

Le dispositif 1 est destiné à être installé en lieu et place de la valve d'origine. Il comporte un carter 77 dont une partie 78 est située à l'intérieur 79 de la roue, tandis qu'une autre partie 80, formant protubérance, s'étend à l'extérieur 81 de la roue. La partie 80 renferme les moyens 2 de commande et les moyens 70 d'association, notamment le doigt 73 qui est guidé à coulissement dans cette partie 80. La partie 78 renferme la masse 71 montée mobile en translation entre deux ressorts 82 de maintien et l'obturateur 76 guidé à coulissement dans un alésage borgne 83 s'étendant dans la direction radiale de la roue et ouvert vers l'extérieur. L'obturateur 76 débouche de l'alésage 83 du côté de l'extérieur de la roue, et forme moyens 84 d'herméticité obturant normalement l'ouverture 85 de cet alésage 83. Un ressort de rappel 86 sollicite l'obturateur 76 en position d'obturation dans laquelle il prend appui sur le carter 77 et sur un épaulement 87 de l'alésage 83.

Lorsque le doigt 73 n'est pas engagé dans les orifices 74, 75, la masse des moyens 72 mobiles d'obturation est faible et n'est pas suffisante par rapport à la force de rappel du ressort 86, pour que la force d'inertie centrifuge puisse provoquer le déplacement de l'obturateur 76. La roue ne peut donc pas se dégonfler. Au contraire, lorsque la masse 71 est associée à l'obturateur 76, la masse totale des moyens 72 mobiles d'obturation permet leur déplacement sous l'effet de la force d'inertie centrifuge. Dès lors, l'obturateur 76 se décolle de l'ouverture 85 et l'air peut s'échapper à travers l'alésage 83 non hermétique et par l'extrémité libre 88 de la protubérance 80. Le doigt 73 est libre de se déplacer radialement dans un alésage de plus grand diamètre de la protubérance 80. Il comporte un disque extrême perpendiculaire qui le guide dans ses déplacements radiaux.

Dans la deuxième variante du troisième mode de réalisation préférentiel représentée en figure 5, la masse supplémentaire 71 est associée mobile radialement à un poussoir 89 des moyens 2 de commande. La masse 71 est intercalée entre deux épaulements 90, 91 qui permettent d'engager cette masse 71, respectivement de la dégager, dans/d'un orifice 92 de l'obturateur 76. Le poussoir 89 définit, entre ces deux épaulements 90, 91, un doigt 95 de diamètre inférieur au diamètre de l'alésage 96 de la masse 71. La différence des diamètres est suffisante pour autoriser les mouvements radiaux de la masse 71. Dans la position engagée représentée, la masse 71 peut se déplacer radialement sous l'effet de la force centrifuge. Par contre, si on dégage la masse 71 en retirant l'ensemble du poussoir 89 hors de l'orifice 92, un organe 93 situé dans le carter 78 coulisse sous l'effet d'un ressort 94 dans l'orifice 92 pour le verrouiller et interdire tout déplacement ultérieur de l'obturateur 76. La roue ne peut donc plus se dégonfler.

L'invention concerne également une roue 3 comportant un dispositif antivol selon l'invention qui est de préférence du type sans chambre à air.

De préférence, la roue 3 selon l'invention comprend des moyens d'association inamovible de cette roue 3 au véhicule, notamment au moyeu, commandés par des moyens de commande, notamment à serrure, interdisant le démontage de la roue 3 par une personne qui ne peut agir sur les moyens de commande, notamment pour une personne qui n'en possède pas la clé. Ces moyens d'association inamovible de la roue 3 au véhicule, qui constituent donc des moyens antivol de la roue 3, sont par exemple constitués de barres venant solidariser la roue 3 au moyeu lorsque la serrure est actionnée.

**Revendications**

1. Dispositif antivol pour véhicule à pneus; du type comportant des moyens (4, 8, 44, 72, 76) de dégonflage automatique d'un pneu (5) du véhicule qui provoquent le dégonflage du pneu (5) lorsque le dispositif est mis à l'état actif par des moyens (2) de commande et que le véhicule est en mouvement, les moyens (4, 8, 44, 72, 76) de dégonflage étant déplacés sous l'action de la force d'inertie centrifuge due à la rotation de la roue (3) correspondante, et qui sont inopérants dans les autres cas, caractérisé en ce que les moyens (4) de dégonflage sont constitués de moyens mobiles d'obturation d'au moins un orifice (7) par lequel l'air sous pression du pneu (3) peut s'échapper, ces moyens (4, 8, 44, 72,76) mobiles d'obturation et de dégonflage automatique obturant normalement hermétiquement cet orifice (7) lorsque le dispositif est à l'état inactif et/ou que la roue (3) est immobile, mais cessant de l'obturer et laissant l'air s'échapper par l'orifice (7) quand le dispositif a été mis à l'état actif et dès que la force d'inertie centrifuge atteint une valeur suffisante pour déplacer les moyens (4, 8, 44, 72, 76) mobiles d'obturation et de dégonflage automatique sur lesquels elle agit.

2. Dispositif selon la revendication 1, caractérisé en ce que les moyens mobiles d'obturation et de dégonflage automatique du pneu (5) sont mobiles au moins dans une direction radiale ou sensiblement radiale de la roue (3) et vers l'extérieur de la roue (3) à partir de leur position normale d'obturation.

3. Dispositif selon l'une quelconque des revendications 1 et 2, caractérisé en ce qu'il comporte des moyens de rappel des moyens (4) de dégonflage, dans leur position normale inopérante d'obturation hermétique de l'orifice (7) au moins lorsque le dispositif est à l'état inactif et/ou lorsque la roue (3) est immobile.

4. Dispositif selon l'une quelconque des revendications 1 à 3, caractérisé en ce que la masse des moyens mobiles d'obturation et de dégonflage est différente selon que le dispositif est à l'état actif ou à l'état inactif.

5. Dispositif selon l'une quelconque des revendications 1 à 4, caractérisé en ce qu'au moins à l'état actif du dispositif, la masse des moyens mobiles d'obturation et de dégonflage automatique est telle que la rotation de la roue (3) entraîne le déplacement de ces moyens mobiles par inertie centrifuge, à l'encontre de la pression interne du pneu (5) et/ou des moyens de rappel, dès que la vitesse du véhicule est supérieure à une vitesse V donnée.

6. Dispositif selon l'une quelconque des revendications 1 à 5, caractérisé en ce qu'à l'état inactif du dispositif, la masse des moyens mobiles d'obturation et de dégonflage automatique a une valeur dimensionnée en fonction de la pression interne du pneu (5) et/ou de la puissance des moyens de rappel, de sorte que ces moyens mobiles d'obturation et de dégonflage sont maintenus immobiles en position d'obturation de l'orifice (7), quelle que soit la vitesse du véhicule.

7. Dispositif selon l'une quelconque des revendications 4 à 6, caractérisé en ce que les moyens (2) de commande comportent des moyens (70) d'association rigide d'une masse (71) supplémentaire aux moyens mobiles d'obturation et de dégonflage automatique qui permettent de solidariser ladite masse (71) aux moyens mobiles d'obturation et de dégonflage automatique lors du passage à l'état actif du dispositif de façon à rendre ces moyens (8) mobiles susceptibles d'être déplacés sous l'action de la force d'inertie centrifuge due à la rotation de la roue.

8. Dispositif selon l'une quelconque des revendications 1 à 7, caractérisé en ce qu'il est associé à au moins une roue (3) du véhicule par des moyens (11, 12) d'association rigide.

9. Dispositif selon l'une quelconque des revendications 1 à 8, caractérisé en ce que le dispositif (1) est associé à la jante (6) de la roue (3), l'orifice (7) étant pratiqué à travers la jante (6).

10. Dispositif selon l'une quelconque des revendications 1 à 9, caractérisé en ce qu'il est associé à la roue (3) non seulement lorsqu'il est à l'état actif, mais aussi lorsqu'il est à l'état inactif, et en ce qu'il comporte des moyens de sécurité actifs lorsque le dispositif 1 est à l'état inactif, bloquant les moyens mobiles d'obturation et de dégonflage automatique dans la position où ils obturent effectivement l'orifice, indépendamment de la position des moyens (2) de commande lorsque le véhicule a atteint une vitesse prédéterminée, pour empêcher le dégonflage, intempestif ou non, à haute vitesse du pneu (5) correspondant.

11. Dispositif selon l'une quelconque des revendications 1 à 10, caractérisé en ce que les moyens mobiles d'obturation et de dégonflage automatique sont constitués d'un piston (13) coopérant avec un carter (10) associé à la jante (6) et coulissant à l'intérieur de ce carter (10) dans une direction au moins sensiblement radiale (9), ce piston (13) comportant des moyens (14) d'herméticité à son extrémité libre (15) tournée vers l'intérieur (16) du pneu (5), les moyens (14) d'herméticité coopérant avec le carter (10) pour obturer le trou (7) de façon hermétique.

12. Dispositif selon l'une quelconque des revendications 1 à 11, caractérisé en ce que les moyens (39) d'association du dispositif (1) à la roue (3) comportant le pneu (5) correspondant sont des moyens (39) d'association amovible, de sorte que le dispositif (1) peut être enlevé pour éviter un risque de dégonflage intempestif, et installé rapidement et facilement dès qu'on veut le rendre actif pour empêcher le vol du véhicule.

13. Dispositif selon l'une quelconque des revendications 1 à 11, caractérisé en ce que les moyens (39) d'association permettent d'associer le dispositif (1) à la valve (30) de gonflage du pneu, l'orifice (7) obturé par les moyens mobiles d'obturation et de dégonflage automatique étant celui de la valve (30).

14. Dispositif selon l'une quelconque des revendications 12 et 13, caractérisé en ce que les moyens (39) d'association amovible comportent des moyens (41) de blocage temporaire, notamment à serrure, du dispositif (1) associé à la roue interdisant toute dissociation du dispositif (1) de la roue lorsque celui-ci est à l'état actif.

15. Dispositif selon la revendication 14, caractérisé en ce que les moyens (41) de blocage temporaire du dispositif (1) associé à la roue constituent également les moyens de commande de la mise à l'état actif et/ou inactif du dispositif (1), de sorte que le dispositif (1) est automatiquement à l'état actif lorsqu'il est associé à la roue.

16. Dispositif selon la revendication 14, caractérisé en ce que les moyens de commande du dispositif (1) sont indépendants des moyens (41) de blocage temporaire.

17. Dispositif selon l'une quelconque des revendications 13 à 16, caractérisé en ce que les moyens mobiles d'obturation et de dégonflage automatique sont constitués de moyens (45) de déplacement de l'obturateur (33) de la valve (30) en position d'ouverture de la valve (30) et de moyens (40, 47, 46) d'obturation de la valve (30) comportant d'une part au moins un orifice (50) par lequel l'air peut s'échapper vers l'extérieur, et d'autre part des moyens (51) mobiles d'obturation de chaque orifice (50).

18. Dispositif selon la revendication 17, caractérisé en ce que les moyens d'obturation de la valve (30) et les moyens (45) d'ouverture de la valve (30) sont constitués d'un bouchon (44) d'obturation monobloc.

19. Dispositif selon l'une quelconque des revendications 17 et 18, caractérisé en ce que les moyens d'obturation de la valve (30) comportent une pluralité d'orifices (50) disposés dans différentes directions par rapport à l'axe (32) de la valve (30).

20. Dispositif selon la revendication 19, caractérisé en ce que les orifices (50) sont disposés radialement par rapport à l'axe (32) de la valve (30) et sont régulièrement répartis autour de cet axe (32).

21. Dispositif selon l'une quelconque des revendications 19 et 20, caractérisé en ce qu'il comporte trois orifices (50) disposés à 120° sur le pourtour de la jupe (47) du bouchon (44) d'obturation de la valve (30).

22. Dispositif selon l'une quelconque des revendications 17 à 21, caractérisé en ce que les moyens (51) mobiles d'obturation de chaque orifice (50) sont constitués d'un piston (52) coulissant dans l'orifice (50) et comportant à son extrémité extérieure (53) des moyens (54) d'herméticité, le piston (52) étant libre de se déplacer vers l'extérieur, mais rappelé vers l'intérieur dans sa position d'obturation par des moyens (55) de rappel, notamment un ressort spiral.

23. Dispositif selon l'une quelconque des revendications 18 à 22, caractérisé en ce que le bouchon (44) d'obturation est en forme de coiffe et comporte un ergot (45) s'étendant à partir du fond (46) du bouchon (44) sensiblement dans l'axe (32) de la valve (30) et vers l'intérieur pour coopérer avec l'obturateur (33) de la valve (30) de façon à l'ouvrir.

24. Roue à pneu pour véhicule, caractérisée en ce qu'elle comporte un dispositif antivol selon l'une quelconque des revendications 1 à 23.

25. Roue selon la revendication 24, caractérisée en ce qu'elle comprend des moyens d'association inamovible de cette roue (3) au véhicule, notamment au moyeu, commandés par des moyens de commande, notamment à serrure, interdisant le démontage de la roue (3) par une personne qui ne peut agir sur les moyens de commande, notamment pour une personne qui n'en possède pas la clé.

**Patentansprüche**

1. Diebstahlsicherungsvorrichtung für Fahrzeuge mit Luftbereifung, mit Mitteln (4, 8, 44, 72, 76) zum automatischen Ablassen der Luft aus einem Reifen (5) des Fahrzeugs, welche Mittel das Luftablassen des Reifens (5) dann hervorrufen, wenn die Vorrichtung durch Steuermittel (2) in aktiven Zustand gebracht und das Fahrzeug in Bewegung ist, wobei die Mittel (4, 8, 44, 72, 76) zum Luftablassen unter der Wirkung der Fliehkraft bei der Rotation des betreffenden Rades (3) verschoben werden und in den anderen Fällen unwirksam sind, *dadurch gekennzeichnet, daß* die Mittel (4) zum Luftablassen durch bewegliche Mittel zum Verschließen mindestens einer Öffnung (7) gebildet sind, durch welche die unter Druck stehende Luft des Reifens (3) entweichen kann, wobei diese beweglichen Mittel (4, 8, 44, 72, 76) zum Verschließen und zum automatischen Luftablassen diese Öffnung (7) normalerweise hermetisch verschließen, wenn die Vorrichtung in einem inaktiven Zustand ist und/oder wenn das Rad (3) unbeweglich ist, mit dem Verschließen jedoch aufhören und die Luft durch die Öffnung (7) entweichen lassen, wenn die Vorrichtung in den aktiven Zustand versetzt worden ist und sobald die Zentrifugalkraft einen Wert erreicht, der zum Verschieben der beweglichen Mittel (4, 8, 44, 72, 76), auf die sie wirkt, ausreichend ist.

2. Vorrichtung nach Anspruch 1, *dadurch gekennzeichnet*, daß die beweglichen Mittel zum Verschließen und zum automatischen Luftablassen des Reifens (5) zumindest in radialer oder im wesentlichen radialer Richtung zum Rad (3) und von ihrer normalen Verschlußposition aus nach außerhalb des Rades beweglich sind.

3. Vorrichtung nach Anspruch 1 oder 2, *dadurch gekennzeichnet*, daß sie Rückbewegungsmittel für die Mittel (4) zum Luftablassen in deren normale unwirksame Position für den hermetischen Verschluß der Öffnung (7) zumindest dann, wenn die Vorrichtung in inaktivem Zustand und/oder wenn das Rad (3) unbeweglich ist, aufweist.

4. Vorrichtung nach einem der Ansprüche 1 bis 3, *dadurch gekennzeichnet*, daß die Masse der beweglichen Mittel zum Verschließen und Luftablassen unterschiedlich ist, je nach dem, ob die Vorrichtung im aktiven oder im inaktiven Zustand ist.

5. Vorrichtung nach einem der Ansprüche 1 bis 4, *dadurch gekennzeichnet*, daß zumindest im aktiven Zustand der Vorrichtung die Masse der beweglichen Mittel zum Verschließen und zum automatischen Luftablassen derart ist, daß die Rotation des Rades (3) die Verschiebung dieser beweglichen Mittel durch Zentrifugalkraft entgegen des inneren Druckes des Reifens (5) und/oder der Rückbewegungsmittel bedingt, sobald die Geschwindigkeit des Fahrzeugs über einer gegebenen Geschwindigkeit V liegt.

6. Vorrichtung nach einem der Ansprüche 1 bis 5, *dadurch gekennzeichnet*, daß im inaktiven Zustand der Vorrichtung die Masse der beweglichen Mittel zum Verschließen und zum automatischen Luftablassen einen Wert aufweist, der in Abhängigkeit vom Innendruck des Reifens (5) und/oder von der Kraft der Rückbewegungsmittel dimensioniert ist, so daß diese beweglichen Mittel zum Verschließen und zum Luftablassen unabhängig von der Geschwindigkeit des Fahrzeugs unbeweglich in Verschlußposition der Öffnung (7) gehalten sind.

7. Vorrichtung nach einem der Ansprüche 4 bis 6, *dadurch gekennzeichnet*, daß die Steuermittel (2) Mittel (70) aufweisen, die einer Zusatzmasse (71) der beweglichen Mittel zum Verschließen und automatischen Luftablassen starr zugeordnet sind und die es ermöglichen, daß diese Masse (71) mit den beweglichen Mitteln zum Verschließen und automatischen Luftablassen bei Übergang in den aktiven Zustand der Vorrichtung derart verbunden werden, daß diese beweglichen Mittel (8) unter der Wirkung der aufgrund der Rotation des Rades auftretenden Zentrifugalkraft verschoben werden.

8. Vorrichtung nach einem der Ansprüche 1 bis 7, *dadurch gekennzeichnet*, daß sie mit mindestens einem Rad (3) des Fahrzeugs durch starre Zuordnungsmittel (11, 12) verbunden ist.

9. Vorrichtung nach einem der Ansprüche 1 bis 8, *dadurch gekennzeichnet*, daß die Vorrichtung (1) mit der Felge (6) des Rades (3) verbunden ist, wobei die Öffnung (7) die Felge (6) durchdringt.

10. Vorrichtung nach einem der Ansprüche 1 bis 9, *dadurch gekennzeichnet*, daß sie mit dem Rad (3) nicht allein dann, wenn sie im aktiven Zustand ist, verbunden ist, sondern auch dann, wenn sie im inaktiven Zustand ist, und daß sie dann, wenn die Vorrichtung (1) im inaktiven Zustand ist, aktive Sicherheitsmittel aufweist, die die beweglichen Mittel zum Verschließen und zum automatischen Luftablassen in der Position, in der sie die Öffnung wirksam verschließen, unabhängig von der Position der Steuermittel (2) dann blockieren, wenn des Fahrzeug eine vorbestimmte Geschwindigkeit erreicht hat, um ein unbeabsichtigtes oder beabsichtigtes Luftablassen bei hoher Geschwindigkeit des betreffenden Reifens (5) zu verhindern.

11. Vorrichtung nach einem der Ansprüche 1 bis 10, *dadurch gekennzeichnet*, daß die beweglichen Mittel zum Verschließen und zum automatischen Luftablassen durch einen Kolben (13) gebildet sind, der mit einem Gehäuse (10) zusammenwirkt, welches mit der Felge (6) verbunden ist, welcher Kolben im Inneren des Gehäuses (10) in eine zumindest im wesentlichen radiale Richtung (9) verschiebbar ist, und der an seinem freien Ende (15) dem Inneren (16) des Reifens (5) zugewandt Luftundurchlässigkeitsmittel (14) aufweist, die mit dem Gehäuse (10) zum hermetischen Verschließen der Öffnung (7) zusammenwirken.

12. Vorrichtung nach einem der Ansprüche 1 bis 11, *dadurch gekennzeichnet*, daß die Verbindungsmittel (39) der Vorrichtung (1) mit dem Rad (3), das den betreffenden Reifen (5) besitzt, unbewegliche Verbindungsmittel (39) sind, so daß die Vorrichtung (1), um die Gefahr eines unbeabsichtigten Luftablassens zu vermeiden, schnell und einfach entfernbar und installierbar ist, sobald sie zum Verhindern eines Fahrzeugdiebstahls aktiv gemacht werden soll.

13. Vorrichtung nach einem der Ansprüche 1 bis 11, *dadurch gekennzeichnet*, daß die Verbindungsmittel (39) eine Verbindung der Vorrichtung (1) mit dem Ventil (30) zum Aufpumpen des Reifens ermöglichen, wobei die Öffnung (7), die von den beweglichen Mitteln zum Verschließen zum automatischen Luftablassen verschlossen ist, diejenige des Ventils (30) ist.

14. Vorrichtung nach Anspruch 12 oder 13, *dadurch gekennzeichnet*, daß die unbeweglichen Verbindungsmittel (39) vorübergehende Blockiermittel (41) zum Verriegeln der mit dem Rad verbundenen Vorrichtung (1) aufweisen, die eine völlige Trennung der Vorrichtung (1) von dem Rad dann verhindert, wenn diese in aktivem Zustand ist.

15. Vorrichtung nach Anspruch 14, *dadurch gekennzeichnet*, daß die vorübergehenden Blockiermittel (41) der mit dem Rad verbundenen Vorrichtung (1), gleichzeitig die Steuermittel für den aktiven und/oder inaktiven Zustand der Vorrichtung (1) bilden, so daß die Vorrichtung (1) automatisch im aktiven Zustand, wenn sie mit dem Rad verbunden ist.

16. Vorrichtung nach Anspruch 14, *dadurch gekennzeichnet*, daß die Steuermittel der Vorrichtung (1) unabhängig von den vorübergehenden Blockiermitteln (41) sind.

17. Vorrichtung nach einem der Ansprüche 13 bis 16, *dadurch gekennzeichnet*, daß die beweglichen Mittel zum Verschließen und zum automatischen Luftablassen durch Mittel (45) zum Verschieben des Verschlußelementes (33) des Ventils (30) in Öffnungsposition des Ventils (30) und durch Mittel (40, 47, 46) zum Verschließen des Ventils (30) gebildet sind, die einerseits mindestens eine Öffnung (50), durch die die Luft nach außen entweichen kann, und andererseits bewegliche Verschlußmittel (51) für jede Öffnung (50) besitzen.

18. Vorrichtung nach Anspruch 17, *dadurch gekennzeichnet*, daß die Verschlußmittel für das Ventil (30) und die Öffnungsmittel (45) für das Ventil (30) durch einen einstückigen Verschlußstopfen (44) gebildet sind.

19. Vorrichtung nach Anspruch 17 oder 18, *dadurch gekennzeichnet*, daß die Verschlußmittel für das Ventil (30) eine Vielzahl von Öffnung (50) aufweisen, die gegenüber der Achse (32) des Ventils (30) in verschiedene Richtungen zeigend angeordnet sind.

20. Vorrichtung nach Anspruch 19, *dadurch gekennzeichnet*, daß die Öffnungen (50) gegenüber der Achse (32) des Ventils (30) radial angeordnet und um diese Achse (32) in gleichmäßigem Abstand verteilt angeordnet sind.

21. Vorrichtung nach Anspruch 19 oder 20, *dadurch gekennzeichnet*, daß sie drei Öffnungen (50) aufweist, die um 120° versetzt am äußeren Umfang des Mantels (47) des Verschlußstopfens (44) des Ventils (30) angeordnet sind.

22. Vorrichtung nach einem der Ansprüche 17 bis 21, *dadurch gekennzeichnet*, daß die beweglichen Mittel (51) zum Verschließen jeder Öffnung (50) durch einen Kolben (52) gebildet sind, der in der Öffnung (50) verschiebbar ist und an seinem äußeren Ende (53) Luftundurchlässigkeitsmittel (54) aufweist und der nach außen hin frei verschiebbar, jedoch nach innen hin in seine Verschlußposition durch Rückbewegungsmittel (55) in Form einer Wendelfeder rückführbar ist.

23. Vorrichtung nach einem der Ansprüche 18 bis 22, *dadurch gekennzeichnet*, daß der Verschlußstopfen (44) die Form einer Kappe besitzt und einen Vorsprung (45) aufweist, der sich vom Grund (46) des Stopfens (44) im wesentlichen in der Achse (32) des Ventils (30) und nach innen erstreckt und mit dem Verschlußelement (33) des Ventils (30) zum Öffnen zusammenzuwirkt.

24. Luftbereiftes Rad für Fahrzeuge, *dadurch gekennzeichnet*, daß es eine Diebstahlsicherung nach einem der Ansprüche 1 bis 23 aufweist.

25. Rad nach Anspruch 24, *dadurch gekennzeichnet*, da es an seiner Radnabe unbeweglich vorgesehene Verbindungsmittel aufweist, die durch Steuermittel zum Verriegeln gesteuert sind, die die Demontage des Rades (3) durch eine Person, die auf die Steuermittel keinen Einfluß nehmen kann, d.h., die nicht im Besitz des Schlüssels ist, verhindern.

**Claims**

1. Anti-theft apparatus for a pneumatic-tyred vehicle, of the type comprising means (4, 8, 44, 72, 76) for automatically deflating a tyre (5) of the vehicle, which cause the tyre (5) to be deflated when the apparatus is activated by control means (2) and when the vehicle moves, the deflating means (4, 8, 44, 72, 76) being displaced by the action of the centrifugal inertia caused by the rotation of the corresponding wheel (3), and which are otherwise inoperative, characterized in that the deflating means (4) consist of movable means for sealing at least one orifice (7) through which the pressurized air in the tyre (3) can escape, these movable sealing and automatic deflating means (4, 8, 44, 72, 76) normally sealing this orifice (7) airtightly when the apparatus is inactivated and/or when the wheel (3) is stationary, but ceasing to seal it and allowing the air to escape through the orifice (7) when the apparatus has been activated and as soon as the centrifugal inertia reaches a value sufficient to displace the movable sealing and automatic deflating means (4, 8, 44, 72, 76) upon which it acts.

2. Apparatus according to Claim 1, characterized in that the movable means for sealing and automatically deflating the tyre (5) can move at least in a radial or substantially radial direction of the wheel (3) and towards the outside of the wheel (3) from their normal sealing position.

3. Apparatus according to either of Claims 1 or 2, characterized in that it comprises means for returning the deflating means (4) to their normal inoperative position of airtightly sealing the orifice (7), at least when the apparatus is inactivated and/or when the wheel (3) is stationary.

4. Apparatus according to any one of Claims 1 to 3, characterized in that the mass of the movable sealing and deflating means varies according to whether the apparatus is activated or inactivated.

5. Apparatus according to any one of Claims 1 to 4, characterized in that, at least when the apparatus is activated, the mass of the movable sealing and automatic deflating means is such that the rotation of the wheel (3) causes these movable means to be displaced by centrifugal inertia, counter to the internal pressure of the tyre (5) and/or of the return means, as soon as the speed of the vehicle exceeds a given speed V.

6. Apparatus according to any one of Claims 1 to 5, characterized in that, when the apparatus is inactivated, the mass of the movable sealing and automatic deflating means has a value calculated as a function of the internal pressure of the tyre (5) and/or the power of the return means, so that these movable sealing and deflating means are held stationary in a position sealing the orifice (7) whatever the speed of the vehicle.

7. Apparatus according to any one of Claims 4 to 6, characterized in that the control means (2) comprise means (70) for fixedly combining an additional mass (71) with the movable sealing and automatic deflating means, which allow the said mass (71) to be integrated with the movable sealing and automatic deflating means when the apparatus becomes activated so as to render these movable means (8) capable of being displaced by the action of the centrifugal inertia caused by the rotation of the wheel.

8. Apparatus according to any one of Claims 1 to 7, characterized in that it is combined with at least one wheel (3) of the vehicle by fixed-combination means (11, 12).

9. Apparatus according to any one of Claims 1 to 8, characterized in that the apparatus (1) is combined with the rim (6) of the wheel (3), the orifice (7) being pierced through the rim (6).

10. Apparatus according to any one of Claims 1 to 9, characterized in that it is combined with the wheel (3) not only when it is activated, but also when it is inactivated, and that it comprises safety means which are activated when the apparatus 1 is inactivated, immobilizing the movable sealing and automatic deflating means in the position where they effectively seal the orifice, independently of the position of the control means (2) when the vehicle has reached a predetermined speed, in order to prevent the deflation, untimely or otherwise, of the corresponding wheel (5) at high speed.

11. Apparatus according to any one of Claims 1 to 10, characterized in that the movable sealing and automatic deflating means consist of a piston (13) cooperating with a housing (10) combined with the rim (6) and sliding inside this housing (10) in an at least substantially radial direction (9), this piston (13) comprising airtightness means (14) at its free end (15) facing the inside (16) of the tyre (5), the airtightness means (14) cooperating with the housing (10) so as to seal the hole (7) airtightly.

12. Apparatus according to any one of Claims 1 to 11, characterized in that the means (39) for combining the apparatus (1) with the wheel (3) which has the corresponding tyre (5) are removable-combination means (39), so that the apparatus (1) may be removed, so as to prevent the risk of untimely deflation, and installed quickly and easily whenever it is desired to activate it so as to prevent the theft of the vehicle.

13. Apparatus according to any one of Claims 1 to 11, characterized in that the combination means (39) allow the apparatus (1) to be combined with the valve (30) for inflating the tyre, the orifice (7) sealed by the movable sealing and automatic deflating means being that of the valve (30).

14. Apparatus according to either of Claims 12 or 13, characterized in that the removable-combination means (39) have means (41) for temporarily immobilizing, in particular with a lock, the apparatus (1) combined with the wheel, which prohibit any separation of the apparatus (1) from the wheel when activated.

15. Apparatus according to Claim 14, characterized in that the means (41) for temporarily immobilizing the apparatus (1) combined with the wheel also form the means for controlling the activation and/or inactivation of the apparatus (1), so that the apparatus (1) is automatically activated when combined with the wheel.

16. Apparatus according to Claim 14, characterized in that the means for controlling the apparatus (1) are independent of the temporary-immobilization means (41).

17. Apparatus according to any one of Claims 13 to 16, characterized in that the movable sealing and automatic deflating means consist of means (45) for displacing the stem (33) of the valve (30) into the open position of the valve (30) and of means (40, 47, 46) for sealing the valve (30) comprising, on the one hand, at least one orifice (50) through which the air can escape to the outside, and, on the other hand, movable means (51) for sealing each orifice (50).

18. Apparatus according to Claim 17, characterized in that the means for sealing the valve (30) and the means (45) for opening the valve (30) consist of a one-piece sealing plug (44).

19. Apparatus according to either of Claims 17 or 18, characterized in that the means for sealing the valve (30) comprise a plurality of orifices (50) arranged in different directions relative to the axis (32) of the valve (30).

20. Apparatus according to Claim 19, characterized in that the orifices (50) are arranged radially relative to the axis (32) of the valve (30) and are distributed regularly about this axis (32).

21. Apparatus according to either of Claims 19 or 20, characterized in that it comprises three orifices (50) arranged at 120° around the circumference of the skirt (47) of the plug (44) for sealing the valve (30).

22. Apparatus according to any of Claims 17 to 21, characterized in that the movable means (51) for sealing each orifice (50) consist of a piston (52) sliding in the orifice (50) and comprising at its outer end (53) airtightness means (54), the piston (52) being freely displaceable outwards, but returned inwards in its sealing position by return means (55), in particular a spiral spring.

23. Apparatus according to any one of Claims 18 to 22, characterized in that the sealing plug (44) is in the form of a cap and has a spigot (45) which extends substantially in the axis (32) of the valve (30) and towards the inside from the base (46) of the plug (44) in order to cooperate with the stem (33) of the valve (30) so as to open it.

24. Pneumatic-tyred wheel for a vehicle, characterized in that it has an anti-theft apparatus according to any one of Claims 1 to 23.

25. Wheel according to Claim 24, characterized in that it comprises means for unremovably combining this wheel (3) with the vehicle, in particular with the hub, which are controlled by control means, in particular having a lock, prohibiting the removal of the wheel (3) by a person who is unable to operate the control means, in particular in the case of a person who does not possess the key for them.

FIG. 1

EP 0 230 162 B1

## FIG. 2

## FIG. 3

# FIG.4

# FIG.5